# EUROPÄISCHE PATENTSCHRIFT

(11) **EP 1 102 663 B1**
(45) Veröffentlichungstag und Bekanntmachung des Hinweises auf die Patenterteilung: **04.02.2004**
(21) Anmeldenummer: 00934927.5
(22) Anmeldetag: 22.04.2000
(51) Int. Cl.: B27B 19/12, B23D 51/02, B23D 51/01

(54) **HANDGEFÜHRTE LAUBSÄGEMASCHINE MIT AUFLAGEFLÄCHE DIE LÖSBAR AN EINEN SÄGETISCH ANCLIPSBAR IST**
HAND-OPERATED SCROLL SAWING MACHINE WITH A SUPPORT SURFACE THAT CAN BE DETACHABLY CLIPPED TO A SAWING TABLE
SCIE A CHANTOURNER MANUELLE DOTEE D'UNE SURFACE D'APPUI CLIPSEE DE FA ON AMOVIBLE SUR UN PLATEAU DE SCIAGE

(30) Priorität: 05.06.1999 DE 19925749
(43) Veröffentlichungstag der Anmeldung: 30.05.2001
(73) Patentinhaber: ROBERT BOSCH GMBH, 70442 Stuttgart (DE)
(72) Erfinder: FRECH, Alfred, D-70771 Leinfelden-Echterdingen (DE); LUTZ, Tobias, D-70794 Filderstadt (DE); ENGELFRIED, Uwe, D-73760 Ostfildern (DE); KEUSCH, Siegfried, D-73779 Deizisau (DE)
(86) Internationale Anmeldenummer: PCT/DE2000/001289
(87) Internationale Veröffentlichungsnummer: WO 2000/074906

(56) Entgegenhaltungen:
- DE-A- 4 442 739
- DE-C- 9 970
- US-A- 2 015 275
- US-A- 2 753 898
- US-A- 5 027 518

## Beschreibung

### Stand der Technik

Die vorliegende Erfindung geht aus von einer handgeführten Laubsägemaschine nach dem Oberbegriff des Anspruchs 1.

Durch die Druckschrift US 5,027,518 ist eine gattungsgemäße Laubsägemaschine bekannt, die im Aufbau einer manuell zu betätigenden Laubsäge gleicht, wobei der typische U-förmige Bügel einen nach unten quer abstehenden Handgriff mit einem Motorgehäuse trägt, wobei die Rückseite des Griffs einen Schalter zur Steuerung der Energieversorgung des Motors trägt.

Gegenüber manuellen Laubsägen hat die bekannte Maschine den Vorteil, daß die manuelle Sägebewegung entfällt.

### Vorteile der vorliegenden Erfindung

Die erfindungsgemäße Laubsägemaschine mit den Merkmalen des Anspruchs 1 hat den Vorteil, daß sie sehr leicht ist, bequem in der Hand liegt und besonders sicher kontrollierbar vom Bedienenden zu führen ist.

Die Handhabungssicherheit wird dadurch verbessert, daß das pistolenartige Basisgehäuse an den Handgriff anschließend nach hinten verlängert ist und sich in der Bedienposition am Unterarm des Bedienenden abstützt.

Dadurch, daß die Arme des U-förmigen Bügels um ein Mehrfaches, insbesondere um das Doppelte länger sind als das Laubsägeblatt, können verhältnismäßig großflächige Werkstücke bis in die Mitte mit der Laubsäge bearbeitet werden, d.h. die maximale Schnittiefe in ein brettartiges Werkstück von dessen Rand aus ist mit etwa 270 mm verhältnismäßig hoch.

Dadurch, daß der Handgriff die Schalttaste des Ein- und Ausschalters des Motors vorn trägt, ist diese Schalttaste besonders gut, insbesondere mit dem Zeigefinger, handhabbar.

Dadurch, daß das Basisgehäuse den Motor und Antriebsmittel zum Hin- und Herbewegen des Laubsägeblattes aufnimmt, sind diese gegen Staub und Beschädigung gesichert.

Dadurch, daß der obere Arm des Bügels an seinem freien Ende ein Endgehäuse trägt, das Spann- und Führungsmittel zum lösbaren Spannen des Laubsägeblatts aufnimmt, sind diese gegen Staub und Beschädigung besonders gesichert.

Dadurch, daß die Laubsäge oben an ihrem Basisgehäuse eine mit Rillen strukturierte, zum anderen Arm fluchtende ebene Auflagefläche zum Abstützen eines Werkstücks trägt, ist die Laubsäge gegenüber dem Werkstück besonders kontrolliert und vibrationsarm führbar, so daß Sägeschnitte nahezu so sauber wie mit dem Lineal bzw. dem Zirkel ausführbar sind.

Dadurch, daß das Basisgehäuse der Laubsäge insbesondere verrastbar, lösbar mit einem z. B. an einer Werkbank befestigbaren Sägetisch koppelbar ist, wobei der Handgriff den Sägetisch nach unten bequem greifbar überragt, kann die Laubsäge mit dem daran befestigten Sägetisch als besonders genau positionierbares Handwerkzeug eingesetzt werden bzw. bei an eine Werkbank angeflanschtem Sägetisch als stationäres Gerät genutzt werden.

Dadurch, daß das Basisgehäuse der Laubsägemaschine über Längsführungen mit dem Sägetisch, insbesondere über unterbrochene Nut- und Federführungen, spielfrei koppelbar ist, kann die Laubsägemaschine von oben in den Sägetisch eingefügt werden und bajonettverschlußartig mit diesem ohne Hilfswerkzeug kombiniert werden.

Dadurch, daß die Laubsägemaschine vom Sägetisch durch Niederdrücken einer überrastbaren Taste trennbar ist, ist das Lösen der Laubsägemaschine ohne Hilfswerkzeug besonders schnell und bequem möglich.

Dadurch, daß die Laubsägemaschine einen parallel zum Laubsägeblatt verschiebbaren Werkstückniederhalter trägt, der zugleich als Fingerabweiser dient, ist das zu bearbeitende Werkstück gegenüber der Laubsägemaschine besonders gut kontrollierbar festgelegt, so daß präzise gesägt werden kann.

Dadurch, daß die Arme des U-förmigen Bügels flache freie Enden aufweisen und daran je eine Blattfeder tragen, sind die Blattfedern vollflächig aufliegend lagesicher mit dem Bügel verbunden und eine parallele Ausrichtung der beiden Blattfedern zueinander zur parallelogrammartigen Führung des Sägeblatts mit einem leichten Pendelhub möglich.

Dadurch, daß die Blattfedern an ihren freien Enden einen mittigen Gabelschlitz tragen, in den je ein Einspannende des Laubsägeblatts lösbar einhängbar ist, ist ein werkzeugloses formschlüssiges Spannen des Laubsägeblatts möglich, das sicherer ist als das bisher bekannte kraftschlüssige Spannen von Laubsägeblättern durch Drehen einer Flügelmutter.

Dadurch, daß die obere Blattfeder U-förmig gebogen und mit ihrem unteren Schenkel so am freien Ende des Armes des U-förmigen Profils befestigt ist, insbesondere genietet, daß die Schenkel gleichsinnig mit dem freien Arm nach außen weisen, wobei die Wölbung und der obere U-Schenkel frei schwenkbar sind, ist besonders kostengünstig eine elastisch vorgespannte Schwinge für ein parallelogrammartiges Getriebe geschaffen, deren Gegenschwinge die am unteren Arm befestigte Blattfeder bildet und für die das Sägeblatt die Koppel ist.

Dadurch, daß die untere Blattfeder, insbesondere formschlüssig, über Antriebsmittel, insbesondere über ein Pleul mit dem Motor koppelbar ist, erfolgt die Übertragung der Antriebskraft nicht unmittelbar auf das Sägeblatt, so daß die Bewegungsumkehr in den Totpunkten auf der Bewegungsbahn des Sägeblatts gedämpft ist.

Dadurch, daß die untere Blattfeder an ihrem freien Ende eine gestanzte, nach unten gewölbte Lasche aufweist, die eine Öse zum Eingriff des Pleuls bildet ist eine besonders kostengünstige Kopplung zwischen Pleul und Blattfeder möglich.

Dadurch, daß die Blattfedern an ihren freien Enden je eine zum Schlitz quer verlaufende Rinne aufweisen in der je ein Nippel des Sägeblatts zentriert und schwenkbar gelenkig abstützbar ist, insbesondere mit seiner Schneide, ist das Laubsägeblatt verpannungsfrei gelenkig im parallelogrammartigen Getriebe mit den schwingenden Blattfedern koppelbar.

Dadurch, daß die Nippel aus angespespritzten Kunststoff bestehen und einen zum Sägeblatt hinweisenden Vierkantbereich aufweisen, die spielfrei den Schlitz durchgreifen, sind die Einspannenden des Laubsägeblatts sicher zentriert und gedämpft gegenüber den Blattfedern lagerbar.

Dadurch, daß der U-förmige Bügel aus Metall besteht, insbesondere Rohr mit kreisrundem oder ellipsenförmigem Querschnitt und daß das Basis- und Endgehäuse aus Kunststoff, insbesondere aus hälftig zusammensetzbaren Gehäuseschalen, bestehen, sind Robustheit durch hohe Stabilität der Widerlager des Laubsägeblatts, Leichtbauweise und ergonomische Formgebung der Laubsägemaschine miteinander vereinbar.

### Zeichnungen

Die Erfindung ist an Hand eines Ausführungsbeispiels mit zugehöriger Zeichnung näher erläutert.

Es zeigen
Fig. 1 eine räumliche Ansicht der erfindungsgemäßen handgeführten Laubsägemaschine von vorn links
Fig. 2 die mit einem Sägetisch verrastete Laubsägemaschine gemäß Figur 1 von vorn rechts
Fig. 3 die Laubsägemaschine gem. Fig. 2 unmittelbar vor dem Verrasten des Sägetisches
Fig. 4 die Laubsägemaschine von vorn
Fig. 5 eine räumliche Ansicht von rechts mit demontiertem bzw. geöffnetem Endgehäuse
Fig. 6 die Ansicht gem. Fig. 5 von oben mit in Löseposition geschwenktem Spannhebel
Fig. 7 den U-förmigen Bügel mit den Blattfedern als Einzelheit
Fig. 8 die untere Blattfeder mit eingehängtem Laubsägeblatt
Fig. 9 die Unteransicht der unteren Blattfeder mit Pleul
Fig. 10 das Einspannende des Laubsägeblatts,
Fig. 11 die Einzelheit des Spannhebels,
Fig. 12 das Sägeblatt als Einzelheit,
Fig. 13 eine Schnittdarstellung des Sägetischs,
Fig. 14 eine räumliche Explosionsdarstellung des Sägetischs mit dem korrespondierenden Gehäusebereich der Laubsägemaschine
Fig. 15 einen Ausschnitt des Querschnitts des Basisgehäuses mit dem gekoppelten Sägetisch
Fig. 16 die Innenansicht der rechten Halbschale des Basisgehäuses und
Fig. 17 die linke Halbschale mit montiertem Motor und Getriebe.

### Beschreibung des Ausführungsbeispiels

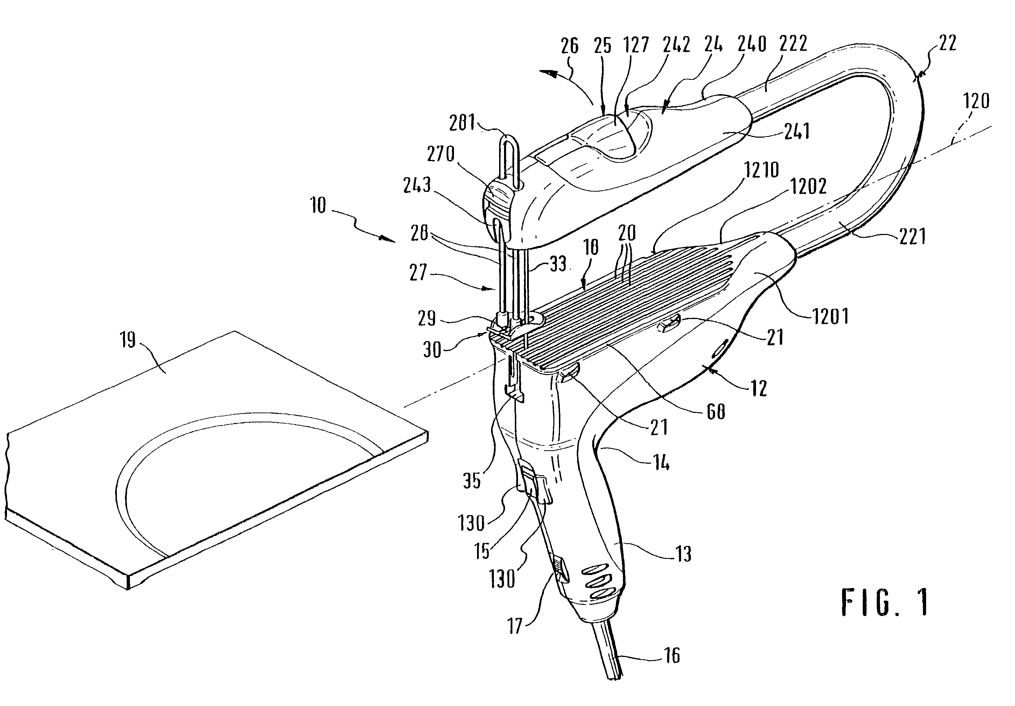

Die in Fig. 1 gezeigte Laubsägemaschine 10 besteht aus einem pistolenartigen unteren Basisgehäuse 12 mit einem quer nach unten abstehenden Handgriff 13. Von seinem Austrittsbereich aus dem Basisgehäuse 12 ist der Handgriff 13 nach hinten abgewinkelt angeordnet. Die hintere Kontur des Handgriffs 13 bildet im Austrittsbereich aus dem Gehäuse 12 eine konkav gewölbte Kehle 14, die waagerecht nach hinten als untere Außenkontur des Basisgehäuses 12 weitergeführt ist. Die Kehle 14 schmiegt sich in die Bedienhand und liegt dabei etwa mittig zwischen Daumen und Zeigefinger auf dieser bzw. in diese eingespannt. Dabei stützt sich der waagerecht verlaufende hintere Bereich des Basisgehäuses 12 auf dem Handrücken und dem Unterarm des Bedienenden und bildet einen verlängerten Stützhebel, so daß dadurch die Laubsäge 10 beim Sägen besonders kontrolliert handhabbar ist.

Der Handgriff 13 trägt vorn eine von aus dem Handgriff 13 tretenden, nasenartigen Vorsprüngen 130 seitlich eng umrahmte Schalttaste 15 zum Unterbrechen bzw. Schließen des Stromkreises. Unten aus dem Handgriff 13 tritt ein Netzanschlußkabel 16 zur Energieversorgung des im Inneren des Basisgehäuses 12 angeordneten, nicht dargestellten Motors.

Unterhalb der Schalttaste 15 ist am Handgriff 13 ein Stellrad 17 einer nicht dargestellten Regelelektronik zur Drehzahleinstellung des Motors angeordnet.

Das Basisgehäuse 12 besteht aus zwei längsgeteilten Halbschalen 1201, 1202 und trägt oben eine planebene, schiffsdeckartige Auflagefläche 18 mit Längsrillen 20, auf der ein Werkstück 19 zur Bearbeitung abstützbar ist.

Das Basisgehäuse 12 trägt auf beiden Seiten unterhalb eines umlaufenden Außenrandes 68 je zwei von einander beabstandete Spannclips 21, von denen nur die beiden auf der linken Seite angeordneten erkennbar sind.

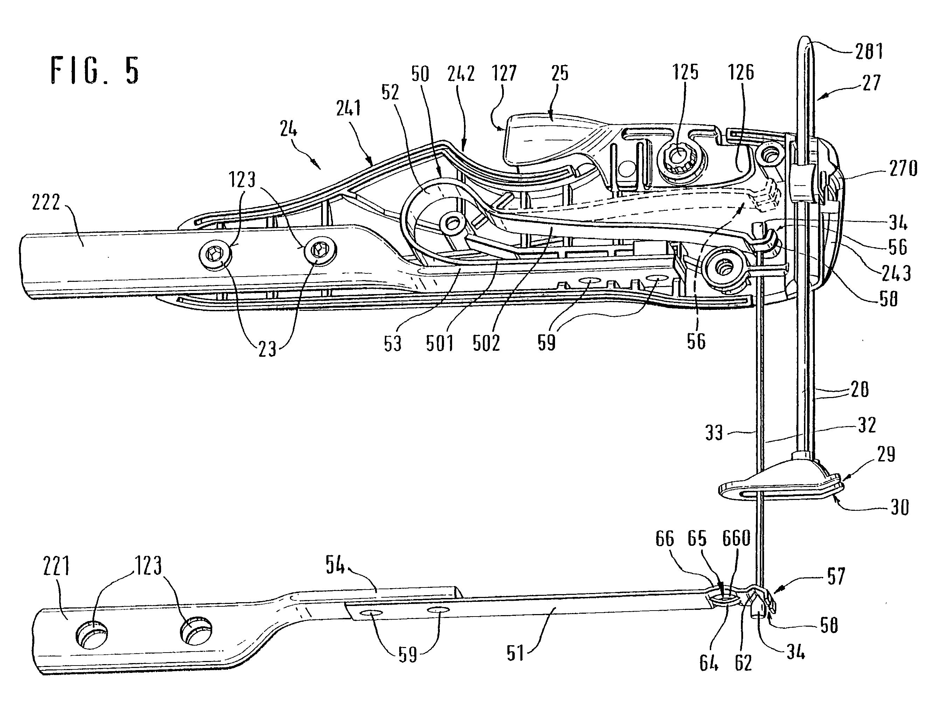

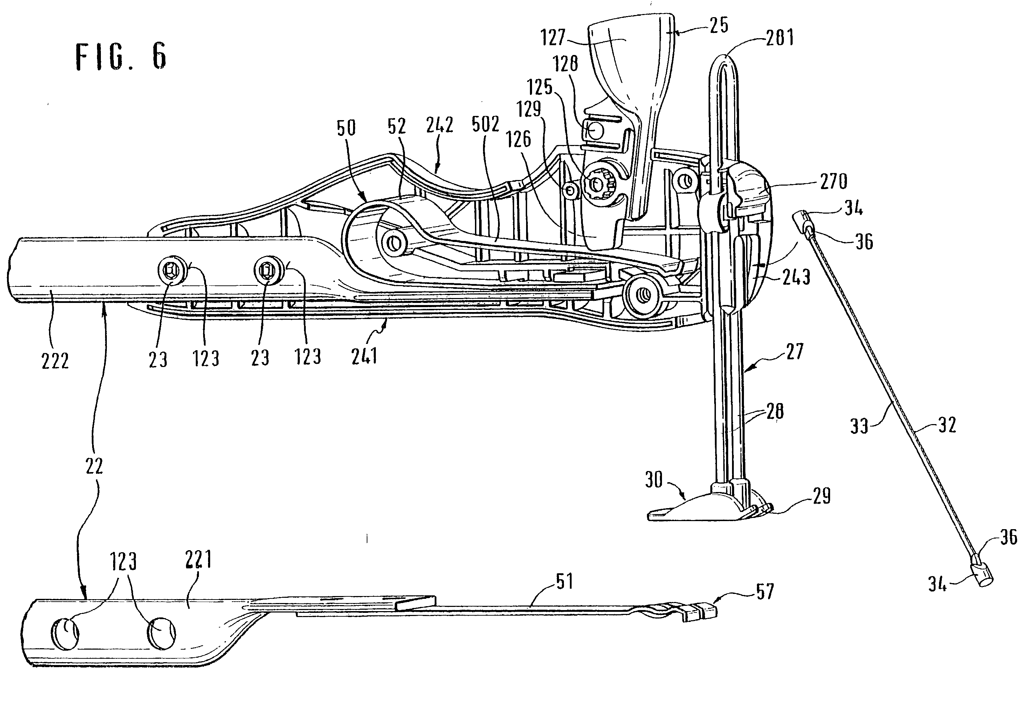

Aus dem Basisgehäuse 12 tritt nach hinten ein unterer Arm 221 eines U-förmigen Bügels 22 aus, der aus gebogenem Rohr besteht und von den Halbschalen 1201, 1202 dicht umgriffen wird. Der untere Arm 221 geht bogenförmig nach oben vorn in einen parallel zum unteren Arm 221 verlaufenden oberen Arm 222 über. Dieser obere Arm 222 trägt an seinem nach vorn gerichteten freien Ende ein Endgehäuse 24, das am Arm 222 über Befestigungsschrauben 23 (Fig. 5, 6) fixiert ist und das aus zwei längsgeteilten Gehäuseschalen 240, 241 besteht. Das Endgehäuse 24 trägt einen von oben zugänglichen Spannhebel 25, dessen Griff 127 durch eine mulden- oder kerbenartige Vertiefung 242 mit dem Finger der Bedienhand untergreifbar ist und nach oben zum Öffnen in Richtung des Betätigungspfeils 26 verschwenkbar ist.

An seinem abgerundeten Frontende trägt das Endgehäuse 24 einen Werkstückniederhalter 27, der aus zwei runden Gleitstangen 28 besteht, die im Endgehäuse 24 gegenüber dem unteren Gehäuse 12 arretierbar verschieblich gelagert sind. Die beiden Gleitstangen 28 ragen oben über das Endgehäuse 24 hinaus und sind durch einen U-förmigen Bogen 281 miteinander verbunden. Die Gleitstangen 28 tragen an ihrem unteren freien Ende, das der Auflagefläche 18 zugewandt ist, einen fußartigen Anschlag 30, der sich parallel zur Auflagefläche 18 hufeisenförmig nach hinten erstreckt mit einem nach vorn offenen Schlitz 29, in dem ein Laubsägeblatt 33, das mit seiner Zahnreihe 32 (Fig. 5, 6) nach vorn weist, seitlich und von hinten geführt bzw. gegen zu weites seitliches oder nach hinten gerichtetes Auslenken gesichert ist.

Der Werkstückniederhalter 27 ist nach Niederdrücken seiner frontal aus dem Endegehäuses ragenden Drucktaste 270 aus seiner Arretierposition nach oben verschiebbar.

Das Laubsägeblatt 33 weist zwei Einspannenden auf (Fig. 5, 6), die als aus Kunstoff eingespritzte Nippel 34 ausgestaltet sind und den Durchmesser des Sägeblatts 33 an dessen Einspannenden deutlich vergrößert, so daß diese in gabelartigen Widerlagern 56, 57 einhängbar (Fig. 5, 6) und damit spannbar sind.

Das Endgehäuse 24 weist an seinem Frontbereich unterhalb der Drucktaste 270 ein schlitzartiges Montagefenster 243 auf, durch das hindurch das als Nippel 34 ausgestaltete Einspannende des Sägeblatts 33 in sein oberes Widerlager 56 einhängbar ist. Dazu korrespondierend weist das Basisgehäuse 12 einen frontalen Montageschlitz 35 auf, durch den das untere Einspannende des Laubsägeblatts 33 in Gestalt eines zweiten Nippels 34 einhängbar ist.

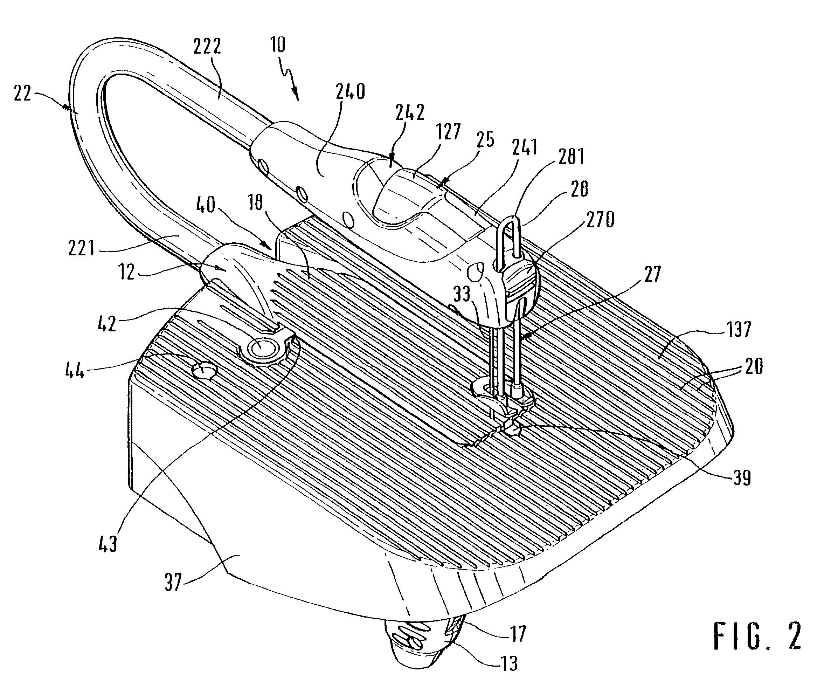

Fig. 2 zeigt die Laubsägemaschine 10 von rechts oben mit einem Sägetisch 37 gekuppelt, dessen obere, planebene Auflagefläche 137 bündig in die Auflagefläche 18 des Basisgehäuses 12 übergeht, wobei die Rillen 20 der Auflageflächen 137, 18 regelmäßig ineinander übergehen.

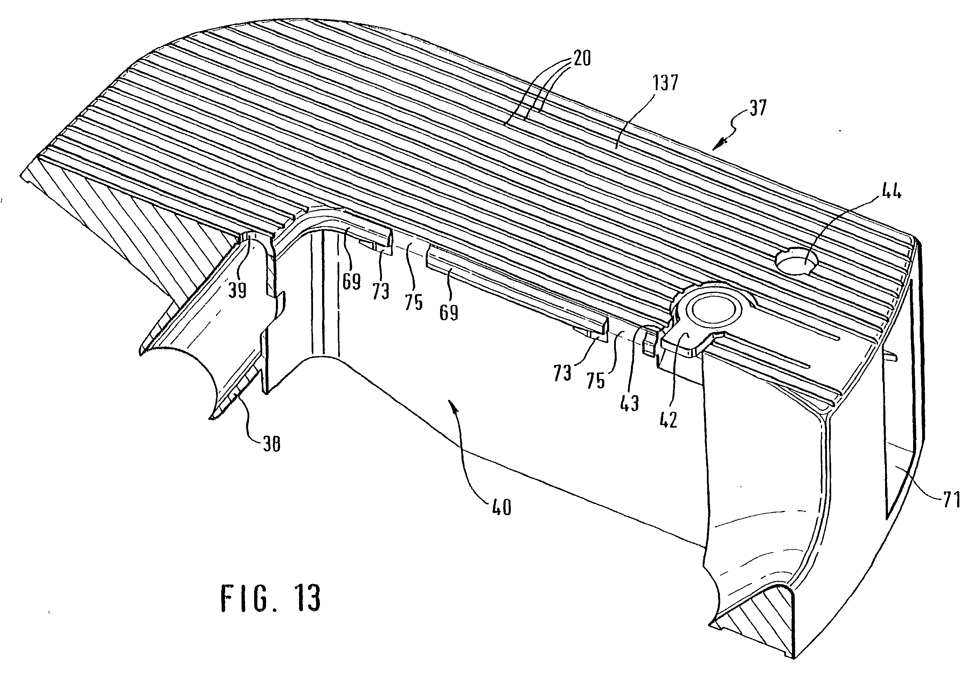

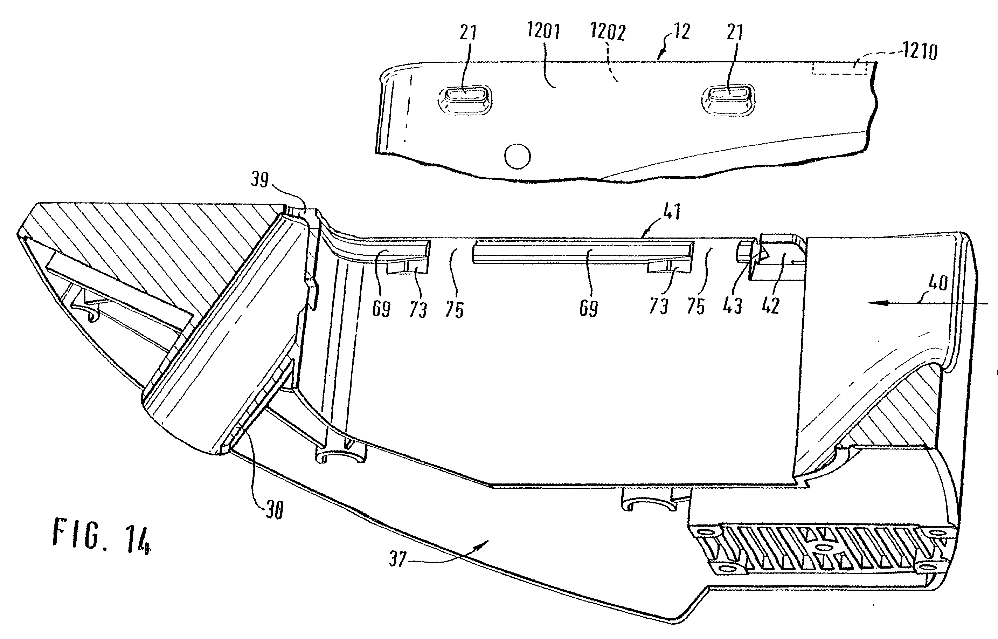

Der Sägetisch 37 weist vorn einen nach unten austretenden Absaugstutzen 38 auf (Fig. 13, 14) der oben im Bereich der Auflagefläche 137 in ein Absaugloch 39 mündet, durch das hindurch beim Sägen gebildete Sägespäne absaugbar sind, wenn an den Absaugstutzen 38 ein Saugschlauch eines Staubsaugers oder dgl. angeschlossen ist.

Der Sägetisch 37 trägt mittig in seinem hinteren Bereich eine U-förmige, in die Auflagefläche 137 hineinführende, nach unten durchgehende Ausnehmung 40, die der Außenkontur bzw. dem Außenrand 68 der Auflagefläche 18 des Basisgehäuses 12 entspricht. Die Ausnehmung 40 trägt oben auf gegenüberliegenden Seiten Längsführungen 69, 70, 73 (Fig. 13), die ein bajonettverschlußartiges Einklinken des Basisgehäuses 12 der Laubsägemaschine 10 in den Sägetisch 37 sowie dessen spielfreie Halterung darin ermöglichen.

Eine Arretiertaste 42 bildet einen Rastanschlag 43, der in eine korrespondierende Aussparung 1210 des Basisgehäuses 12 nahe der Auflagefläche 18 eingreift und das Basisgehäuse 12 und damit die Laubsägemaschine 10 gegenüber dem Sägetisch 37 lösbar festhält.

Die Auflagefläche 137 des Sägetischs 37 wird senkrecht nach unten von nach außen gleichmäßig beabstandenden Schraubenlöchern 44 durchtreten, durch die hindurch Schrauben steckbar sind, mit denen der Sägetisch 37 an einer festen Unterlage, beispielsweise Werkbank oder dgl. verschraubbar ist. Außerdem weist der Sägetisch 37 an seinem äußeren Rand hinten Klemmöffnungen 71 (Fig. 13) auf zum Eintritt einer Spannbakke einer nicht dargestellten Schraubzwinge, mit der er an einer festen Unterlage befestigbar ist.

Der Handgriff 13 ragt unterhalb des Sägetischs 37 hervor, so daß die Laubsägemaschine 10 mit gehaltertem Sägetisch 37 gemeinsam als Handwerkzeug einsetzbar ist. Damit ist die Laubsägemaschine 10 gegenüber dem Werkstück 19 besonders bequem so ausrichtbar, daß dieses rechtwinklig gegenüber dem Sägeblatt 33 bzw. der Auflagefläche 18, 137 positioniert ist.

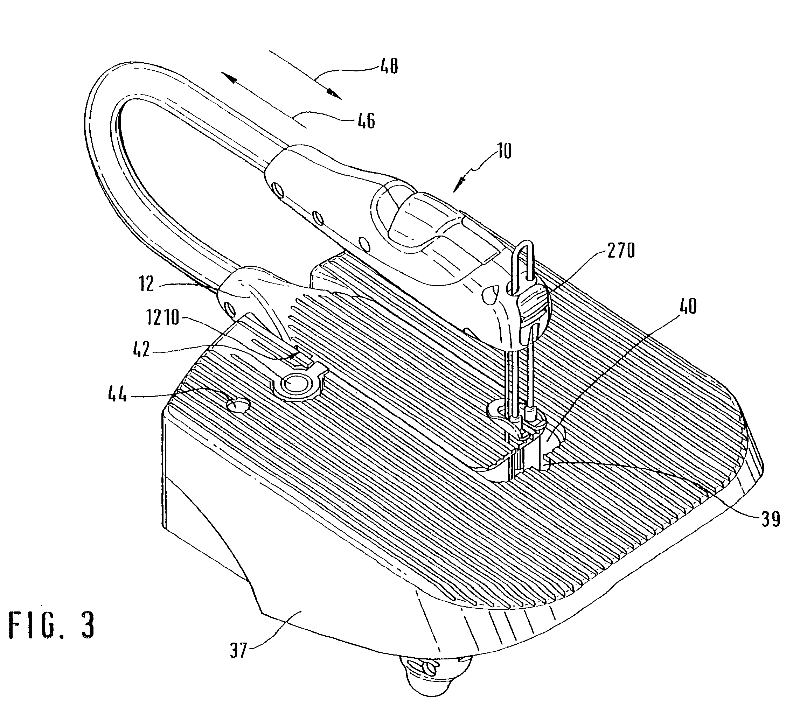

Fig. 3 zeigt die Laubsägemaschine 10 beim Lösen des Sägetischs 37 bzw. kurz vor dem Einklinken in bzw. Verrasten mit diesem. Dadurch ist erkennbar, daß das Basisgehäuse 12 gegenüber dem Sägetisch 37 parallel zu dessen Auflagefläche 137 zum endgültigen Verrasten bzw. Lösen verschoben werden muß. Zuvor ist das Basisgehäuse 12 der Laubsägemaschine 10 senkrecht von oben in die Ausnehmung 40 einzusetzen, damit die Spannclips 21 sowie der Außenrand 68 des Gehäuses 12 mit den korrespondierenden Führungsfedern 69, 70, 73 des Sägetisches 37 in Eingriffsposition kommen.

Die Pfeile 46, 48 zeigen die Richtung zum Lösen bzw. Befestigen der Laubsägemaschine 10 gegenüber dem Sägetisch 37 nach dem senkrechten Einfügen des Basisgehäuses 12 in die Ausnehmung 40.

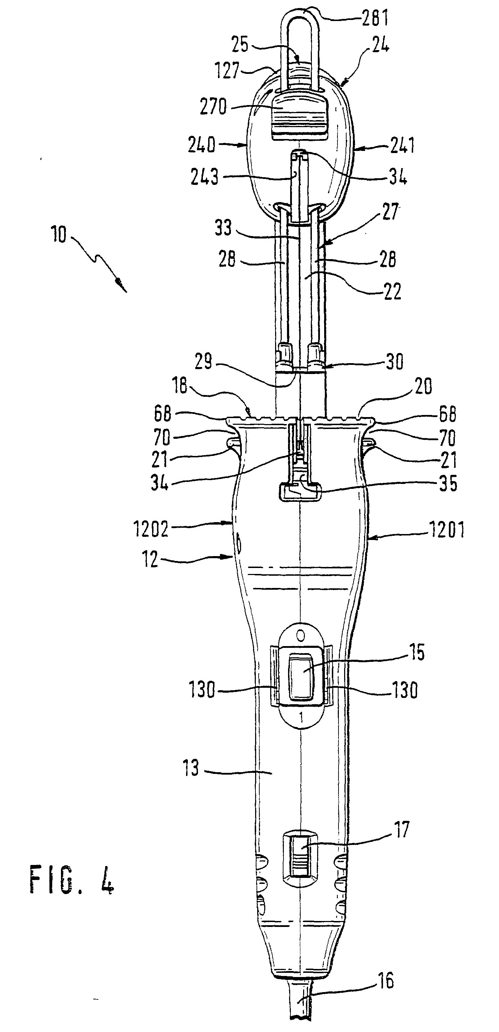

Fig. 4 zeigt die Frontansicht der Laubsägemaschine 10, wobei besonders der zum Koppeln mit dem Sägetisch 37 relevante Querschnitt bzw. die Kontur des Basisgehäuses 12 mit den Spannclips 21 und dem Außenrand 68 deutlich wird. Erkennbar sind auch der Montageschlitz 35 bzw. das Montagefenster 243 und weitere bezeichnete Einzelheiten der vorherigen Figuren, ohne daß diese hier wiederholt genannt werden sollen.

Fig. 5 zeigt die vorderen Bereiche des unteren und oberen Arms 221, 222 des U-förmigen Bügels 22 ohne das Basisgehäuse 12, nur mit der linken Halbschale des Endgehäuses 24 und dem Spannmechanismus zum Lösen bzw. Befestigen des Laubsägeblattes 33.

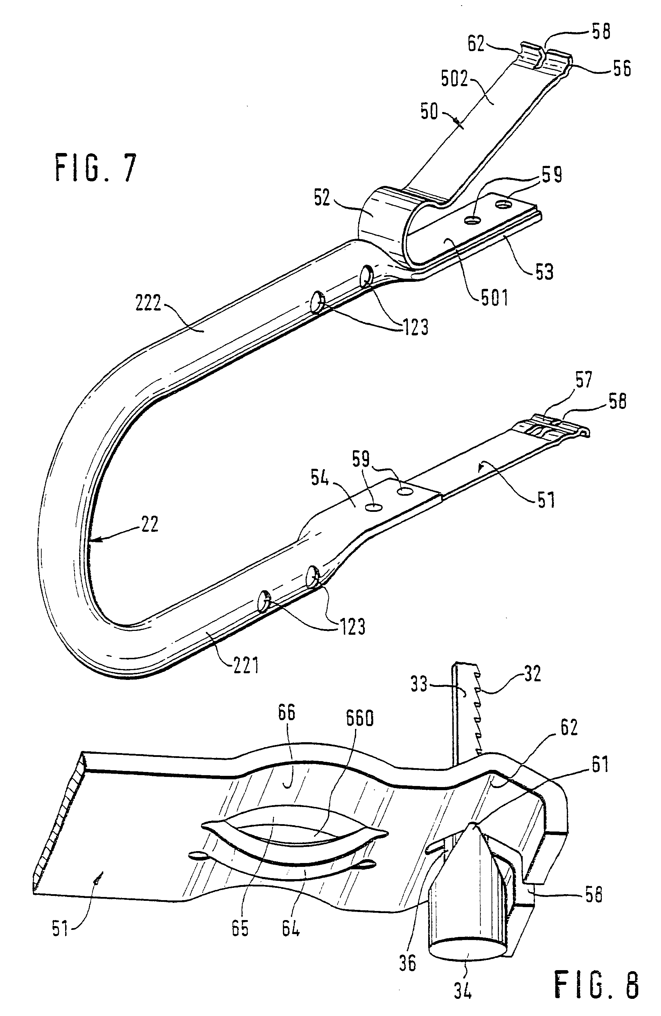

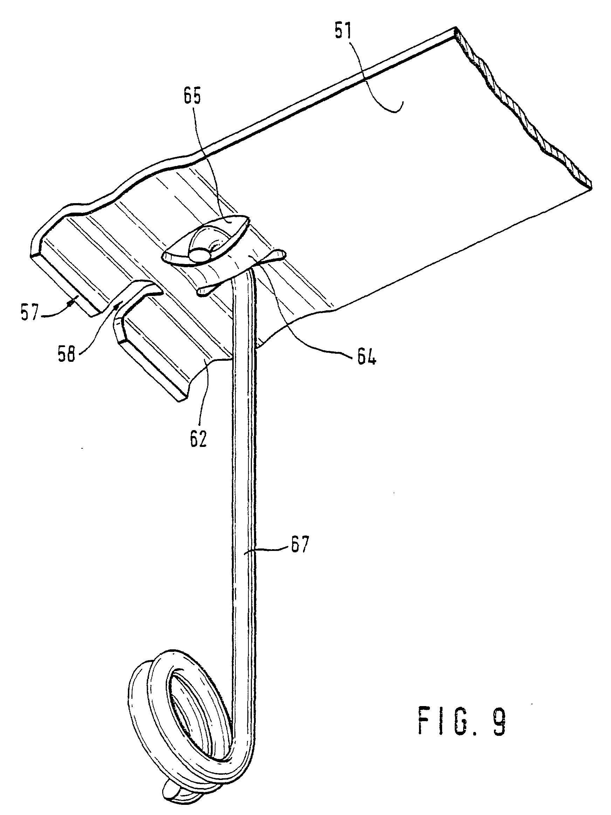

Der untere Arm 221 weist an seinem freien Ende eine waagerechte Abflachung 54 auf, an der eine ebene Blattfeder 51 an Befestigungspunkten 59 befestigt, insbesondere genietet, ist. Die Blattfeder 51 trägt an ihrem als Widerlager für das Sägeblatteinspannende dienenden freien Ende 57 einen mittigen Gabelschlitz 58 zum Durchtritt des Sägeblatts 33 und zum Festhalten dessen Nippels 34. Das freie Ende 57 der unteren Blattfeder 51 ist am äußersten Ende nach unten - und daran anschließend nach hinten dachartig nach oben - abgewinkelt, so daß auf der Unterseite der dachartigen Abwinklung in Querrichtung eine Rinne 62 gebildet wird, in die sich eine Schneide 61 des Nippels 34 (Fig. 8) gelenkartig pendelbar abstützt. Nach dem dachartigen Bereich setzt sich das freie Ende 57 der unteren Blattfeder 51 in einem kurzen, planebenen Bereich fort, an den sich eine nach oben gerichtete Wölbung 66 mit einem zentralen Längsschlitz 660 anschließt, der durch Stanzen bzw. Prägen einer nach unten gewölbten Lasche 64 gebildet wird. Die Wölbung 66 und die Lasche 64 bilden gemeinsam eine ovale Öse 65 zum Einhängen eines Pleuls 67 (Fig. 9), das die Drehbewegung des Motors in eine Auf- und Abbewegung der unteren Blattfeder 51 umwandelt.

Am oberen Arm 222 des Bügels 22 ist die linke Schale 241 des Endgehäuses 24 mittels Befestigungsschrauben 23 befestigt. Das freie Ende des oberen Arms 222 bildet wie das des oberen Arms 221 ebenfalls eine waagerechte Abflachung 53, an deren Oberseite an Befestigungspunkten 59 die obere Blattfeder 50 befestigt insbesondere genietet ist.

Die obere Blattfeder 50 erstreckt sich als nach rechts offenes U mit ihren Schenkeln 501, 502 nach außen - wie das freie Ende 53 des oberen Arms 222, wobei der untere, kurze Schenkel 501 am Arm 222 befestigt ist. Die Schenkel 501, 502 sind durch eine Wölbung 52 miteinander verbunden.

Das freie Ende 56 des oberen, längeren Schenkels 502 der Blattfeder 50 ist am freien Ende nach oben abgewinkelt und daran anschließend V-förmig nach unten geformt - spiegelbildlich zum äußeren Ende 57 der unteren Blattfeder 51 und bildet darin ebenfalls eine Rinne 62, die ebenso durch einen mittigen Gabelschlitz 58 über ihre Mitte hinaus durchtreten wird, so daß das Sägeblatt 33 mit seinem anderen Nippel 34 im Gabelschlitz 58 bzw. in der Rinne 62 des V-förmigen Bereichs gelenkig gelagert ist, spiegelbildlich zum unteren Einspannende 34 des Sägeblatts 33.

Die Arme 221, 222 tragen nahe ihren freien Enden Durchtrittslöcher 123, die quer zur durch den Bügel 22 aufgespannten Ebene verlaufen und dem Durchtritt der Befestigungsschrauben 23 zur Befestigung des Basis- bw. Endgehäuses 12, 24, insbesondere deren Halbschalen, dienen.

Dem oberen Schenkel 502 der oberen Blattfeder 50 ist ein als zweiarmiger Hebel ausgebildeter Spannhebel 25 zugeordnet, der um eine Schwenkachse 125 im Endgehäuse 24 mit seinem Griff 127 nach oben verschwenkbar ist, so daß sein Nocken 126 nach unten tritt und dabei den oberen Schenkel 502 der Blattfeder 50 zum unteren Arm 221 hin mitnimmt. Zum besseren Eingriff des Fingers des Bedienenden ist der Griff 127 des Spannhebels 25 ein nach hinten offener, rohrartiger Hohlkörper, in den der Bedienende mit einem Finger, geführt durch eine Vertiefung 242 in der äußeren Kontur des Endgehäuses 24, bequem eingreifen und nach oben verschwenken kann.

Fig. 5 zeigt auch den vorderen Bereich des Endgehäuses 24 mit dem Werkstück-Niederhalter 27. Dessen Gleitstangen 28 tragen unterhalb des Endgehäuses 24 den fußartigen Anschlag 30 mit einem zentralen Schlitz 29. Dabei ist die hufeisenförmige Ausgestaltung des Anschlags 30 zum seitlichen und hinteren Umgreifen des Sägeblatts 33 erkennbar. Ebenso ist die Drucktaste 270 erkennbar, durch deren Niederdrücken die Arretierung des Niederhalters 27 bzw. der Gleitstangen 28 - nach oben - aufhebbar ist. Dabei ist der Niederhalter 27 durch Auf- oder Abschieben des Bogens 281 mit der Hand des Bedienenden bequem einstellbar.

Die Position des Spannhebels 25 ist in Spannposition dargestellt, wobei er in die konkave Vertiefung eintaucht und damit bündig zur Außenkontur des Endgehäuses 24 verläuft. Die obere Blattfeder 50 ist in der oberen Totpunktlage, d.h. in Spannposition, nur gestrichelt gezeichnet und in der Löseposition zum Wechseln des Sägeblatts 33 in durchgehenden Linien gezeichnet.

Die Fig. 6 zeigt die gleichen Einzelheiten wie Fig. 5, wobei nur der Spannhebel 25 mit seinem Griff 127 nach oben und mit seinen Nocken 126 nach unten geschwenkt den oberen Schenkel 502 der Blattfeder 50 nach unten drückt. Dabei wird deutlich die konkave Vertiefung 242 zum bündigen Eintauchen des Griffes 127 innerhalb der Außenkontur des Endgehäuses 24. Darüber hinaus ist ein zur Schwenkachse 125 benachbarter Raststift 129 der Gehäuseschale 241 gezeigt, in den eine hohlzylindrische Rastöffnung 128 des Spannhebels 25 bei Erreichen der Löseposition einrasten kann. Dabei ist das Sägeblatt 33 aus den Widerlagern bzw. den freien Enden 56, 57 der oberen und unteren Blattfedern 50, 51 gelöst und nach vorn entnommen bzw. bereit zum Wiedereinsetzen in die Widerlager. Dazu muß das Montagefenster 243 im Endgehäuse 24 bzw. das Montageschlitz 35 (Fig. 1) im Basisgehäuse 12 durchtreten werden.

Fig. 7 zeigt den aus Metallrohr mit rundem Querschnitt gefertigten U-förmigen Bügel 22 mit den daran genieteten Blattfedern 50, 51, wobei das freie Ende 56 der oberen Blattfeder 50 mit dem längsverlaufenden Gabelschlitz 58 bzw. mit der Rinne 62 besonders deutlich wird, ebenso die planebene, parallele Ausrichtung der oberen und unteren Abflachungen 53, 54 des oberen und unteren Arms 221, 222, ohne daß dazu die übrigen bezeichneten - schon in den vorigen Figuren gezeigten - Einzelheiten wiederholt werden sollen.

Fig. 8 zeigt in einer Vergrößerung das freie Ende 57 der unteren Blattfeder 51 mit dem Gabelschlitz 58, der Kehle 62, der Lasche 64, der Wölbung 66, der Öse 65 und dem Schlitz 660. Es ist erkennbar, daß der Nippel 34 des Laubsägeblatts 33 mit seiner Schneide 61 in der Rinne 62 pendelartig verschwenkbar gelagert ist, wobei das Laubsägeblatt 33 mit einem an die Schneide 61 anschließenden Vierkant 36 bzw. seiner Zahnreihe 32 den Gabelschlitz 58 durchtritt. Der Kunststoff-Nippel 34 wird im Gabelschlitz 58 dadurch spielfrei gelagert, daß er sich nach der Schneide 61 in Gestalt eines Vierkant 36 fortsetzt, der sich weit über die Schneide 61 hinaus erstreckt und das Sägeblatt 33 allseitig umgreift. Der Vierkant 36 dient auch der elektrischen Isolierung des Sägeblatts 33 gegenüber dem Motor bzw. dem Getriebe.

Fig. 9 zeigt eine Unteransicht des freien Endes 57 der unteren Blattfeder 51, wobei der Gabelschlitz 58, die Rinne 62, die Lasche 64 sowie die Öse 65 bzw. der Längsschlitz 660 erkennbar sind, in die hakenartig ein Pleul 67 greift, das durch den nicht dargestellten Motor in eine Hin- und Her- bzw. Auf- und Abbewegung versetzt wird.

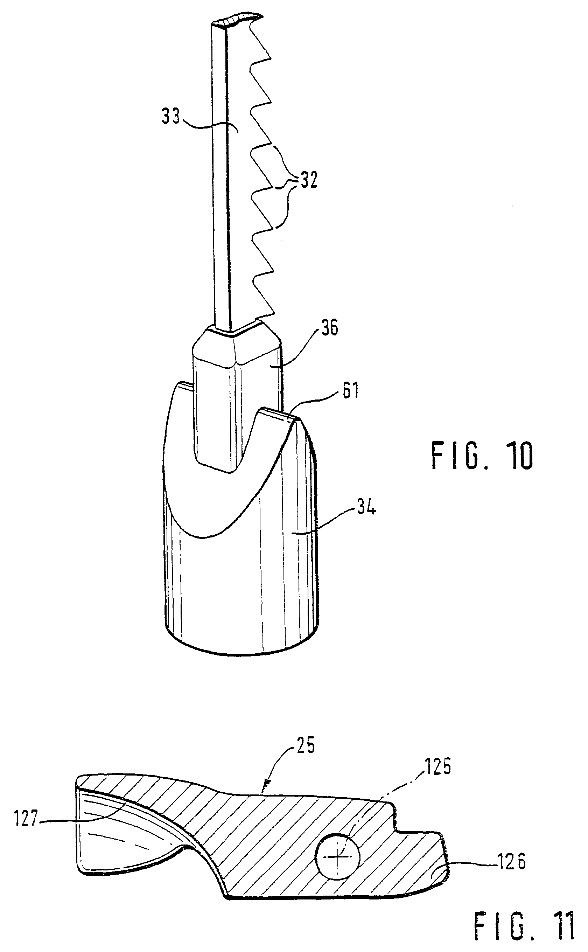

Fig. 10 zeigt den Nippel 34, der sich am äußersten Ende des Laubsägeblatts 33 zylindrisch erstreckt und durch zwei dachartige Schrägen zum anderen Nippel 34 hin die Schneide 61 bildet, aus der der Vierkantbereich 36 tritt, der das Laubsägeblatt 33 spielfrei, verdrehsicher im Gabelschlitz 58 der Blattfedern 50, 51 lagert.

Fig. 11 zeigt die Einzelheit des als zweiarmiger Hebel ausgestalteten Spannhebels 25, dessen einer Arm als hohler Griffbereich 127 und dessen anderer Arm als Nocken 126 ausgestaltet ist, zwischen denen die Drehachse 125 angeordnet ist.

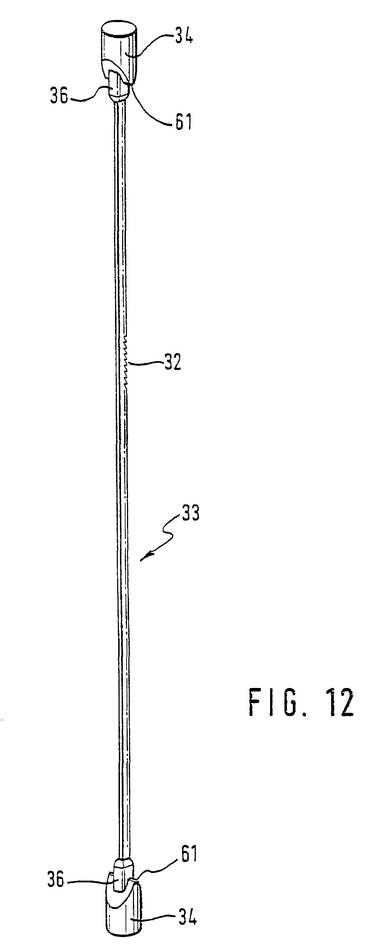

Fig. 12 zeigt die Einzelheit des Laubsägeblatts 33 mit den als Nippel 34 ausgestalteten Einspannenden, deren Dachschrägen, Schneiden 61 und Vierkantbereiche 36.

Fig. 13 zeigt einen räumlichen Teillängsschnitt des Sägetisches 37, wobei der Absaugstutzen 38, das Absaugloch 39, die Ausnehmung 40, die Arretiertaste 42 mit dem Rastanschlag 43, das Schraubenloch 44 und die Rillen 20 erkennbar sind. Außerdem sind als Längsführung des Basisgehäuses 12 dienende Führungsfedern 69 erkennbar, mit Unterbrechungen 75 sowie seitlichen Rampen 73 sowie an der Außenseite hinten eine Eintrittsöffnung 71 für die Klemmbacke einer Schraubzwinge, zum Befestigen des Sägetisches auf einer Unterlage wie z.B. Werkbank oder dgl.. Durch das Absaugloch 39 ist im stationären Betrieb der Laubsäge 10 das Sägeblatt 33 zum Auswechseln in das untere Widerlager einführbar.

Die Unterbrechungen 75 der Führungsfedern 69 dienen dem senkrechten Eintritt der seitlichen Spannclipse 21 des Basisgehäuses 12 der Laubsägemaschine 10 von oben in die Ausnehmung 40 zum Untergreifen der Führungsfedern 69 und zum seitlichen Abstützen an den Rampen 73.

Die Wirkungsweise des bajonettartigen Einclipssystems zwischen dem Basisgehäuse 12 und dem Sägetisch 37 ist in Fig. 14 nochmals verdeutlicht, in einem seitlichen Teilschnitt schräg von unten betrachtet. Dabei sind die Führungsfedern 69, deren Unterbrechungen 75, die keilförmig nach innen ausgebildeten Rampen 73 und die Arretiertaste 42 im Rastanschlag 43 deutlich erkennbar. Hervorzuheben ist auch der Absaugstutzen 38, das Absaugloch 39 und die Ausnehmung 40 sowie explosionsartig - in Betrachtungsrichtung oben - der Seitenbereich des Basisgehäuses 12 mit den Spannclipsen 21 und dem oberen Außenrand 68 des Basisgehäuses 12 zum Eingriff in die Ausnehmung 40 des Sägetischs 37.

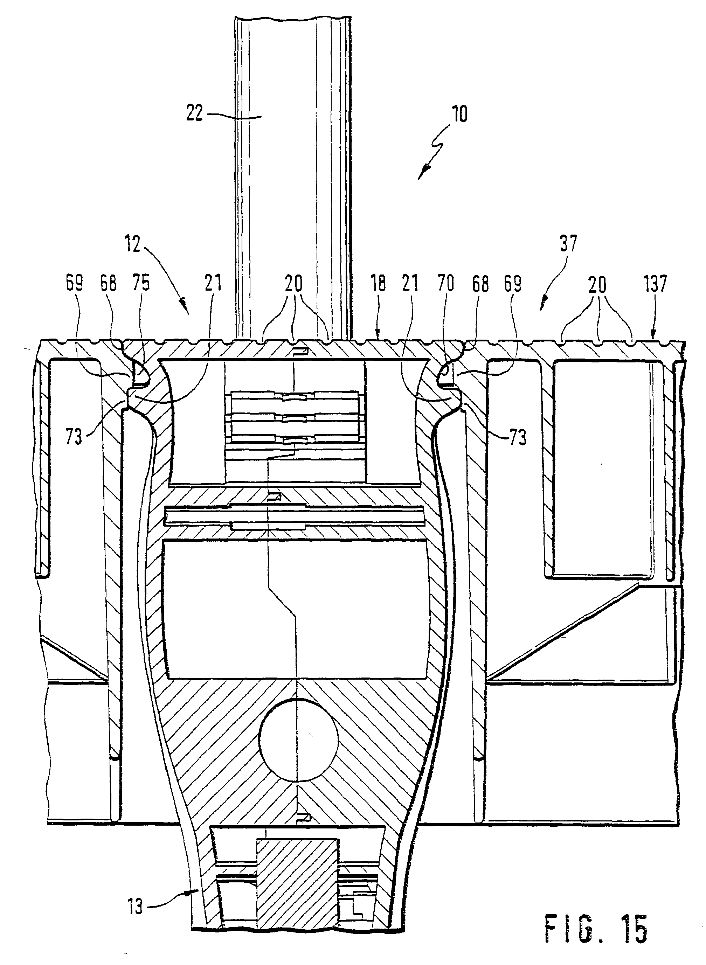

Fig. 15 zeigt mit einem Querschnitt des Basisgehäuses 12 mit dem Sägetisch 37 das bajonettverschlußartige Spannsystem zwischen dem Basisgehäuse 12 und dem Sägetisch 37. Dabei ist erkennbar, wie sich die Führungsfedern 69 zwischen dem längs verlaufenden Außenrand 68 sowie den Spannclipsen 21 seitlich und vertikal abstützen und daß zwischen den Spannclipsen 21 und dem Außenrand 68 eine Führungsnut 70 zum Eintritt der Führungsfedern 69 gebildet wird.

Deutlich erkennbar sind auch die Rampen 73, die sich seitlich gegen die Spannclipse 21 stützen und für eine horizontal spielfreie Halterung des Basisgehäuses 12 am Sägetisch 37 sorgen.

Weiter sind die Rillen 20 in der Auflagefläche 18 des Gehäuses 12 und in der Auflagefläche 137 des Sägetisches 37 erkennbar und daß der Handgriff 13 unten so weit aus dem Sägetisch 37 herausragt, daß er bequem mit der Bedienhand umgreifbar ist.

Für den Stationärbetrieb wird der Sägetisch 37 zunächst an einer Werkbank befestigt. Dann wird die Laubsägemaschine 10 von oben - die Vorderseite nach vorn ausgerichtet - in dessen Ausnehmung 40 eingesetzt, bis die Auflagefläche 18 des unteren Gehäuses 12 der Laubsägemaschine 10 zur planebenen, Auflagefläche 137 des Sägetisches 37 fluchtet. Durch anschließendes Verschieben des Laubsägemaschine 10 in die Ausnehmung 40 hinein wird die Laubsägemaschine 10 gegenüber dem Sägetisch 37 bajonettverschlußartig gespannt, indem die Arretiertaste 42 mit ihrem Rastanschlag 43 in einer Aussparung 1210 des Basisgehäuse 12 verrastet und dieses - und damit die Laubsägemaschine 10 - gegen unbeabsichtigtes Lösen vom Sägetisch 37 festhält.

Die zwei Führungsfedern 79 entlang dem oberen Rand der Ausnehmung 40 haben einen keilförmigen Querschnitt. Sie werden zwischen dem ebenfalls keilförmigen oberen Außenrand 68 des Basisgehäuses 12 und den keilförmigen, nach außen verjüngend verlaufenden Spannclips 21 an den Außenseiten des Basisgehäuses 12 räumlich gespannt. Diese räumliche Spannung wird horizontal dadurch verbessert, daß die Außenseite der Spannclipse 21 sich seitlich gegenüber Schrägflächen der Rampen 73 verkeilt abstützen.

Zum Lösen der Laubsägemaschine 10 vom Sägetisch 37 muß zunächst die Arretiertaste 42 gegenüber der Oberfläche 41 nach unten gedrückt werden, damit der Rastanschlag 43 nach unten aus der Aussparung 1210 austreten kann und damit die Arretierung aufgehoben ist. Durch anschließendes horizontales Verschieben der Maschine aus der Ausnehmung 40 heraus läßt sich die Laubsägemaschine 10 nach oben vom Sägetisch 37 herausnehmen, wenn die Spannclipse 21 die Ausnehmungen 75 der Führungsfeder 69 erreicht haben.

Durch die Neigung des Handgriffs 13 gegenüber dem Gehäuse 12 um ca. 20° liegt die Maschine dem Bedienenden sicher in der Hand, wobei das Maschinengewicht vom Handrücken und Unterarm aufgenommen wird und die Bewegungsfreiheit der Laubsägemaschine bei deren Drehung und Schwenkung optimal kontrollierbar ist.

Im handgehaltenen Betrieb der mit dem Sägetisch 37 gekoppelten Laubsägemaschine 10 kann die Auflagefläche 137 des Sägetischs 37 nach oben gegen die Werkstückunterseite gedrückt werden. Da das Sägeblatt 33 auf Zug nach unten sägt, wird dabei das Werkstück 19 auf die Auflageflächen 18, 137 des Basisgehäuses 12 und des Sägetischs 37 gezogen. Dadurch ist ein vibrationfreies, ruhiges Sägen möglich.

Die die Schalttaste 15 seitlich überragenden bzw. einrahmenden Nasen 30 verhindern ein unbeabsichtigtes Einschalten der Laubsägemaschine, z.B. beim Einsetzen der Laubsägemaschine 10 in den Sägetisch 37.

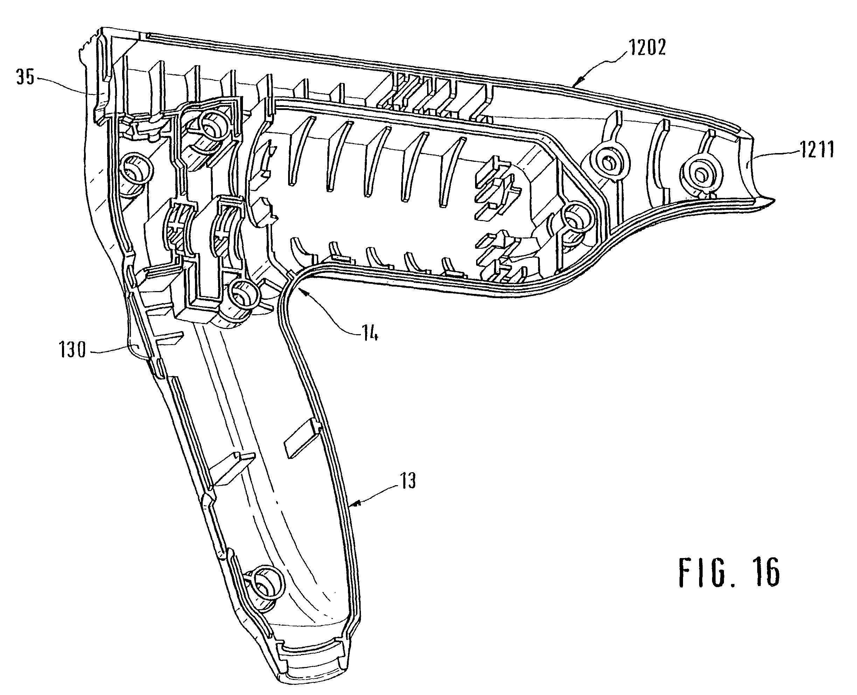

Die in Fig. 16 gezeigte Innenansicht der rechten Halbschale 1201 des Basisgehäuses 12 zeigt deutlich den Handgriff 13, die Kehle 14, eine der Nasen 130, den Montageschlitz 35, die Mündung 1211 zum Durchtritt und engen, ringartigen Umgreifen des unteren Arms 221 sowie Schraubendurchtrittslöcher für die feste Koppelung des Gehäuses 12 mit dem Bügel 22.

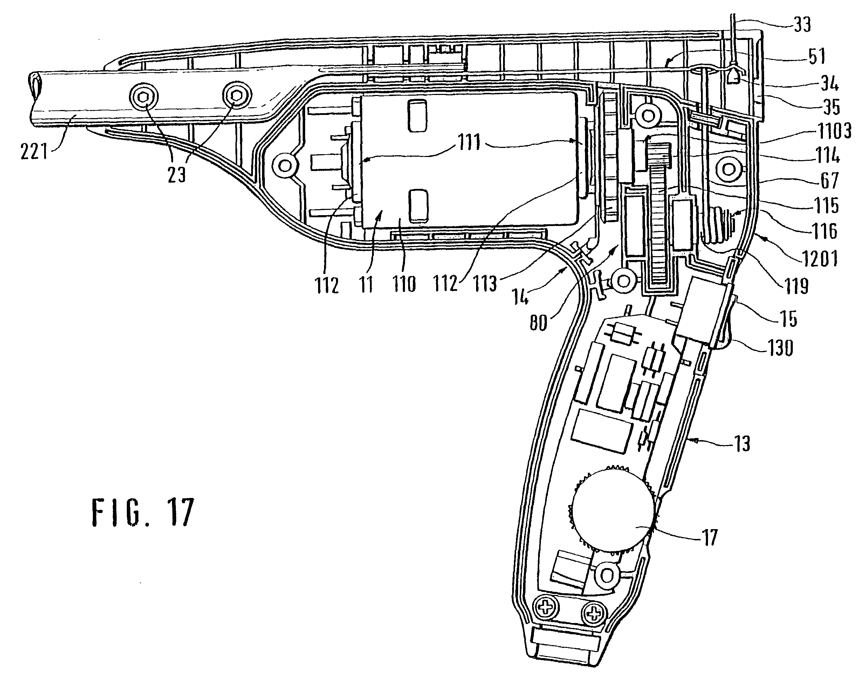

Ergänzend zu Figur 16 zeigt Fig. 17 die linke Halbschale 1202 des Basisgehäuses 12 mit montiertem Motor 11 und Getriebe 80, wobei das Motorgehäuse 110 über Gummiringe 112 elastische Lagerpunkte 111 bildet zur schwingungsgedämpften Aufnahme des Motors 11. Eine Motorwelle 1103 trägt einen Lüfter 113 und dazu axial benachbart ein Ritzel 114, das mit einem Gegegenritzel 115 kämmt. Das Gegegenritzel 115 sitzt drehfest auf einer Kurbelwelle 116, die am freien Ende einen Kurbelzapfen 119 zum Antrieb des Pleuls 67 trägt.

## Patentansprüche

1. Handgeführte Laubsägemaschine (10) mit einem Laubsägeblatt (33), das zwischen zwei, vorzugsweise aus einem U-förmigen, aus Rohr bestehenden Bügel (22) gebildeten, Armen (221, 222) an deren Enden lösbar spannbar ist, wobei das Ende einer der Arme (221, 222) einen Handgriff (13) trägt, **dadurch gekennzeichnet,**
**daß** die Laubsägemaschine (10) lösbar an einen Sägetisch (37), insbesonder bajonettverschlußartig, anclipsbar ist, wobei die Laubsägemaschine (10) gemeinsam mit dem Sägetisch (37) eine mobile Handwerkzeugmaschine bildet, die bei Befestigen des Sägetischs (37) an einer Werkbank oder dergl. als stationäres Gerät dient.

2. Laubsäge nach Anspruch 1, **dadurch gekennzeichnet, daß** die Laubsägemaschine (10) eine Auflagefläche (18) zum Abstützen eines Werkstücks (19) aufweist, vorzugsweise oben an einem den Handgriff (13) tragenden pistolenartigen Basisgehäuse (12), die beim Koppeln mit dem Sägetisch (37) zu dessen ebener, insbesondere mit Rillen (20) strukturierter, oberer Stützfläche (137) fluchtend ausgerichtet ist.

3. Laubsäge nach Anspruch 1, **dadurch gekennzeichnet, daß** die Auflagefläche (18) des Basisgehäuses (12) eben, vorzugsweise parallel oberhalb des unteren Arms (221) verläuft, so daß zwischen den Armen (122, 222) bearbeitete Werkstücke (19) auf den Auflageflächen (18, 137) bis zum Anschlag an der Wölbung des Bügels (22) verschiebbar sind, ohne zuvor einen der Arme (221, 222) zu berühren.

4. Laubsäge nach Anspruch 1, **dadurch gekennzeichnet, daß** der Sägetisch (37) eine, insbesondere durchgehende, insbesondere seitlich offene, Ausnehmung (40) aufweist, die mit der Kontur des Basisgehäuses (12) korrespondiert und in die die Laubsägemaschine (10) mit dem Gehäuse (12) einsetzbar ist.

5. Laubsäge nach Anspruch 4, **dadurch gekennzeichnet, daß** die Laubsägemaschine (10) mit dem Basisgehäuse (12) so in die Ausnehmung (40) einsetzbar ist, daß die obere Stützfläche (137) des Sägetischs (37) bündig in die Auflagefläche (18) des Basisgehäuses (12) übergeht, insbesondere unter gleichmäßiger Anordnung der Abstände und Tiefe der Rillen (20).

6. Laubsäge nach Anspruch 4, **dadurch gekennzeichnet, daß** der Sägetisch (37) mit dem Basisgehäuse (12) über Längsführungen, insbesondere Nut-Feder-Führungen (21, 68, 69, 70, 73), spielfrei koppelbar ist, die in der Ausnehmung (40) angeordnet sind.

7. Laubsäge nach Anspruch 4, **dadurch gekennzeichnet, daß** das Basisgehäuse (12) außen auf gegenüberliegenden Seiten Führungsnuten (70) aufweist, die mit Führungsfedern (69) in der Ausnehmung (40) des Sägetischs (37) korrespondieren.

8. Laubsäge nach Anspruch 1, **dadurch gekennzeichnet, daß** der Sägetisch (37) Eingriffsöffnungen für Schraubzwingen oder dergl. Spannmittel zum Festlegen des Sägetischs (37) auf einer Werkbank oder dergl. aufweist.

9. Laubsäge nach Anspruch 1, **dadurch gekennzeichnet, daß** der Sägetisch (37) Durchtrittslöcher (44) für Schrauben zum Festlegen des Sägetischs (37) auf einer Werkbank oder dergl. aufweist.

10. Laubsäge nach Anspruch 1, **dadurch gekennzeichnet, daß** der Sägetisch (37) einen Absaugstutzen (38) zum Ansetzen eines Staubabsaugschlauchs oder dgl. Kupplung zu einem Staubabsauggerät trägt, der mit einer Absaugöffnung (39) an den Auflageflächen (18, 137) kommuniziert.

11. Laubsäge nach Anspruch 1, **dadurch gekennzeichnet, daß** der untere Arm (221) das pistolenartig ausgestaltete Basisgehäuse (12) trägt, aus dem nach unten - schräg nach hinten gerichtet - ein Handgriff (13) tritt, wobei dessen hintere Kontur eine gekrümmt abgewinkelte Kehle (14) bildet, die sich in Bedienposition in die Hand des Bedienenden schmiegt und dabei vertikal auf und waagerecht darin eingespannt ist, wobei der untere Arm (221) hinten aus dem Basisgehäuse (12) tritt, bogenförmig nach oben und nach vorn in den zweiten Arm (222) übergeht.

12. Laubsäge nach Anspruch 1, **dadurch gekennzeichnet, daß** sich das Basisgehäuse (12) an den Handgriff (13) anschließend weiter nach hinten erstreckt und als Unterarmstütze dient und daß der Handgriff (13) sich unterhalb des Sägetisches so erstreckt, daß er frei mit der Bedienhand greifbar und führbar ist, so daß die mit dem Sägetisch (37) gekoppelte Laubsägemaschine (10) gemeinsam mit diesem als mobile Handwerkzeugmaschine für besondere Zwecke handlich und bequem einsetzbar ist.

## Claims

1. Hand-held powered fretsaw (10) having a fretsaw blade (33) which can be releasably clamped between two arms (221, 222), preferably formed from a U-shaped tubular frame (22), at their ends, the end of one of the arms (221, 222) carrying a handle (13), **characterized in that** the powered fretsaw (10) can be releasably clipped, in particular like a bayonet catch, onto a saw table (37), the powered fretsaw (10) together with the saw table (37) forming a portable powered hand tool which serves as a stationary implement when the saw table (37) is fastened to a workbench or the like.

2. Fretsaw according to Claim 1, **characterized in that** the powered fretsaw (10) has a bearing surface (18) for supporting a workpiece (19), preferably at the top on a pistol-like base housing (12) carrying the handle (13), this bearing surface (18), when coupled to the saw table (37), being in alignment with its planar, top supporting surface (137) structured in particular with grooves (20).

3. Fretsaw according to Claim 1, **characterized in that** the bearing surface (18) of the base housing (12) runs in a planar, preferably parallel manner above the bottom arm (221), so that workpieces (19) machined between the arms (122, 222) can be displaced on the bearing surfaces (18, 137) up to the stop at the arch of the frame (22) without touching one of the arms (221, 222) beforehand.

4. Fretsaw according to Claim 1, **characterized in that** the saw table (37) has an, in particular continuous, in particular laterally open recess (40) which corresponds with the contour of the base housing (12) and into which the powered fretsaw (10) can be inserted with the housing (12).

5. Fretsaw according to Claim 4, **characterized in that** the powered fretsaw (10) can be inserted with the base housing (12) into the recess (40) in such a way that the top supporting surface (137) of the saw table (37) merges in a flush manner into the bearing surface (18) of the base housing (12), in particular with the grooves (20) being arranged at uniform distances apart and at a uniform depth.

6. Fretsaw according to Claim 4, **characterized in that** the saw table (37) can be coupled free of play to the base housing (12) via longitudinal guides, in particular tongue-and-groove guides (21, 68, 69, 70, 73), which are arranged in the recess (40).

7. Fretsaw according to Claim 4, **characterized in that** the base housing (12) has guide grooves (70) on the outside on opposite sides, these guide grooves (70) corresponding with guide tongues (69) in the recess (40) of the saw table (37).

8. Fretsaw according to Claim 1, **characterized in that** the saw table (37) has engagement openings for screw clamps or clamping means of that kind for securing the saw table (37) on a workbench or the like.

9. Fretsaw according to Claim 1, **characterized in that** the saw table (37) has through-holes (44) for screws for securing the saw table (37) on a workbench or the like.

10. Fretsaw according to Claim 1, **characterized in that** the saw table (37) has an extraction connection (38) for attaching a dust extraction hose or coupling of that kind to a dust extractor, this extraction connection (38) communicating with an extraction opening (39) at the bearing surfaces (18, 137).

11. Fretsaw according to Claim 1, **characterized in that** the bottom arm (221) carries the base housing (12) of pistol-like configuration, from which a handle (13) emerges at the bottom such as to be directed obliquely rearwards, the rear contour of the handle (13) forming a fillet (14) which is angled in a curved manner and nestles in the operating position into the hand of the operator and in the process is gripped vertically on the said hand and horizontally therein, the bottom arm (221) emerging from the base housing (12) at the rear and merging upwards in a curved manner and forwards into the second arm (222).

12. Fretsaw according to Claim 1, **characterized in that** the base housing (12), adjoining the handle (13), extends further to the rear and serves as bottom-arm support, and **in that** the handle (13) extends below the saw table in such a way that it can be freely gripped and guided with the operating hand, so that the powered fretsaw (10) coupled to the saw table (37) can be used together with the latter in a convenient and comfortable manner as a portable powered hand tool for special purposes.

## Revendications

1. Scie à chant tourné (10) manuelle comportant une lame de scie (33) fixée de manière amovible à l'extrémité de deux bras (221, 222) d'un archet long (22) en tube, notamment en forme de U, l'extrémité de l'un des bras (221, 222) portant une poignée (13),
**caractérisée en ce que**
la scie à chant tourné (10) peut s'enclipser de manière amovible à un plateau de scie (37) notamment par une liaison de type baïonnette,
la scie à chant tourné (10) constituant avec le plateau de scie (37), une machine outil à main, mobile, qui lorsque le plateau de scie (37) est fixé à un établi ou installation analogue, sert d'appareil fixe.

2. Scie à chant tourné selon la revendication 1,
**caractérisée en ce que** la scie (10) comporte une surface d'appui (18) pour soutenir une pièce (19) de préférence fixée à un boîtier de base (12), en forme de pistolet, porté à l'extrémité supérieure d'une poignée (13), et lors du couplage au plateau de scie (37) cette surface d'appui est alignée sur la surface d'appui supérieure (137), notamment lorsqu'elle est structurée avec des rainures (20).

3. Scie à chant tourné selon la revendication 1,
**caractérisée en ce que**
la surface d'appui (18) du boîtier de base (12) est plane en étant notamment parallèle et au-dessus du bras inférieur (221) pour que la pièce travaillée (19) puisse coulisser entre les bras (122, 222) jusqu'à venir en butée contre la partie cintrée de l'archet (22) sans toucher au préalable l'un des bras (221, 222).

4. Scie à chant tourné selon la revendication 1,
**caractérisée en ce que**
le plateau de scie (37) comporte une cavité (40) notamment continue, ouverte sur le côté, cette cavité correspondant au contour du boîtier de base (12) et la scie à chant tourné (10) avec le boîtier (12) se place dans ce boîtier de base.

5. Scie à chant tourné selon la revendication 4,
**caractérisée en ce qu'**
elle (10) s'utilise avec le boîtier de base (12) dans la cavité (40) pour que la surface d'appui supérieure (137) du plateau de scie (37) arrive à niveau avec la surface d'appui (18) du boîtier de base (12) en particulier pour une répartition régulière des intervalles et de la profondeur des rainures (20).

6. Scie à chant tourné selon la revendication 4,
**caractérisée en ce que**
le plateau de scie (37) est susceptible d'être couplé sans jeu au boîtier de base (12) par des guides longitudinaux en particulier des guides à rainures et clavettes (21, 68, 69, 70, 73), ces rainures étant prévues dans la cavité (40).

7. Scie à chant tourné selon la revendication 4,
**caractérisée en ce que**
lé boîtier de base (12) comporte extérieurement sur ses deux côtés opposés, des rainures de guidage (70) qui correspondent aux clavettes de guidage (69) dans la cavité (40) du plateau de scie (37).

8. Scie à chant tourné selon la revendication 1,
**caractérisée en ce que**
le plateau de scie (37) comporte des orifices de prise pour des serre-joints à vis ou moyens de serrage analogues permettant de bloquer le plateau de scie (37) sur un établi ou support analogue.

9. Scie à chant tourné selon la revendication 1,
**caractérisée en ce que**
le plateau de scie (37) comporte des orifices traversant (44) pour des vis permettant de fixer le plateau de scie (37) sur un établi ou support analogue.

10. Scie à chant tourné selon la revendication 1,
**caractérisée en ce que**
le plateau de scie (37) comporte des embouts d'aspiration (38) pour installer un tuyau d'aspiration de poussière ou un moyen de liaison analogue relié à un aspirateur de poussière qui communique avec un orifice de sortie (39) au niveau des surfaces d'appui (18, 37).

11. Scie à chant tourné selon la revendication 1,
**caractérisée en ce que**
le bras inférieur (221) porte le boîtier de base (12) en forme de pistolet, avec une poignée (13) qui vient en saillie vers le bas, en biais vers l'arrière, le contour arrière de cette poignée formant une gorge recourbée (14), cintrée qui en position de service s'adapte à la main de l'opérateur et est ainsi serrée verticalement et horizontalement, alors que le bras inférieur (221) arrive derrière le boîtier de base (12) en rejoignant le second bras (222) suivant une forme courbe, vers le haut et vers l'avant.

12. Scie à chant tourné selon la revendication 1,
**caractérisée en ce que**
le boîtier de base (12) comporte de manière adjacente à la poignée (13), en outre un appui de sous-bras s'étendant vers l'arrière et la poignée (13) passe sous le plateau de scie de façon à pouvoir être prise librement par la main de l'utilisateur et être guidée, pour permettre d'utiliser la scie à chant tourné (10) couplée au plateau de scie (37) en commun avec celui-ci comme machine outil à main pour des travaux particuliers, en étant manoeuvrable et facile à utiliser.
